# FASCICULE DE BREVET EUROPEEN

(11) **EP 1 436 976 B1**
(45) Date de publication et mention de la délivrance du brevet: **09.12.2009**
(21) Numéro de dépôt: 02801361.3
(22) Date de dépôt: 07.10.2002
(51) Int. Cl.: H04M 3/537

(54) **NOTIFICATION DE MESSAGES PAR IMAGE VECTORIELLE A UN TERMINAL**
MITTEILUNGSBENACHRICHTIGUNG DURCH VEKTORBILD ZU EINEM ENDGERÄT
MESSAGE NOTIFICATION BY VECTOR IMAGE TO A TERMINAL

(30) Priorité: 15.10.2001 FR 0113296
(43) Date de publication de la demande: 14.07.2004
(73) Titulaire: FRANCE TELECOM, 75015 Paris (FR)
(72) Inventeur: VACQUIE, Luc, F-31380 Saint Jean l'Herm (FR)
(74) Mandataire: Bloch & Bonnétat
(86) Numéro de dépôt international: PCT/FR2002/003402
(87) Numéro de publication internationale: WO 2003/034700

(56) Documents cités:
- EP-A- 0 196 781
- EP-A- 0 318 428
- EP-A- 1 014 630
- WO-A-98/01982
- WO-A-98/48553
- US-A- 5 579 472
- US-A- 5 894 506
- "PHONEMAIL ICON NOTIFICATION AND SELECTION" IBM TECHNICAL DISCLOSURE BULLETIN, IBM CORP. NEW YORK, US, vol. 36, no. 11, 1 novembre 1993 (1993-11-01), page 529 XP000424940 ISSN: 0018-8689

## Description

La présente invention concerne un système de notification visuelle de l'état de la messagerie d'un usager.

Il existe actuellement des systèmes de notification de messages pour des terminaux radiotéléphoniques mobiles cellulaires qui font apparaître un message textuel indiquant «Vous avez un message» sur l'écran du terminal, ou bien un pictogramme, par exemple une enveloppe, affiché sur l'écran du terminal pour indiquer à l'usager que des messages vocaux ou des télécopies par exemple ont été reçus dans sa messagerie, ou bien une sonnerie prévenant la réception d'un message dans la messagerie.

De tels systèmes de notification sont implantés par exemple dans divers moyens de réception de message afin d'inviter l'usager à consulter les messages enregistrés.

La demande de brevet EP 1014630A décrit un système de notification de messages dans des messageries à des terminaux d'abonné. Des messageries de divers types sont attribuées à un terminal. Dans le terminal sont affichés distinctement par exemple la lettre E ou V pour indiquer le type de messagerie de courrier électronique ou vocale, et en dessous de chaque lettre la quantité de messages stockés dans la messagerie respective. Ces informations affichées ne forment pas une image évoluant en dépendance d'événements dans les messageries.

Dans de tels systèmes de notification de messages, l'usager doit consulter les messages les uns à la suite des autres dans chacun des différents moyens de réception des messages mis à sa disposition, ce qui est relativement fastidieux.

Afin de remédier à cet inconvénient, la demande de brevet français 01-06839 déposée le 23 mai 2001 et non encore publiée propose un système qui notifie des messages reçus par l'intermédiaire d'une image vectorielle visualisée sur le terminal et composée de plusieurs éléments graphiques variables représentatifs d'évènements de l'ensemble des messages reçus. Le système de notification comprend un moyen d'analyse des messages reçus et un moyen de construction d'images liées à une base d'éléments graphiques qui sont inclus dans un boîtier comportant un modem et relié au terminal, par exemple à travers une prise péritel d'un téléviseur constituant le terminal.

La présente invention vise à fournir un système de notification de messages dans lequel les moyens de réception de messages sont très éloignés du terminal et qui permet de gérer la construction et l'affichage de l'image vectorielle dans le terminal lui-même.

A cette fin, un système pour notifier des messages reçus dans des moyens de réception de messages à un terminal par image vectorielle visualisée sur le terminal, le système comprenant un moyen d'analyse de messages reçus connecté aux moyens de réception pour définir des événements de l'ensemble des messages reçus, et un moyen de construction d'image lié à une base d'éléments graphiques pour générer une image vectorielle composée d'éléments graphiques dépendant des événements, est **caractérisé en ce qu**'il comprend un serveur de notification apte à transmettre au terminal à travers un réseau de télécommunications une notification comprenant des adresses d'éléments graphiques fournis par le moyen d'analyse en correspondance aux évènements, et en ce que le terminal comprend le moyen de construction d'image et la base d'éléments graphiques afin que le moyen de construction soit apte à construire et présenter dans le terminal un comportement de l'image vectorielle composée d'éléments graphiques sélectionnés dans la base en fonction des adresses d'élément graphique incluses dans la notification transmise.

L'invention offre avantageusement la visualisation d'un seul coup d'oeil d'une image vectorielle, telle qu'un personnage, dont le comportement est représentatif de l'état des moyens de réception de messages, c'est-à-dire de l'ensemble des messages analysés qui sont reçus dans une messagerie unifiée qui n'est pas située à demeure à côté du terminal, mais quelque part dans le réseau de télécommunications rattaché au terminal. Comme on le verra dans la suite, les éléments graphiques de l'image vectorielle qu'a choisis l'usager ne sont pas transmis tels quels par le serveur de notification, mais sous la forme d'adresses désignant ces éléments graphiques qui sont prémémorisés dans une base de données incluse dans le terminal lui-même.

Les éléments graphiques nécessaires à la construction d'un comportement de l'image vectorielle à afficher peuvent dépendre de données locales prémémorisées dans le terminal, telles que des numéros d'appel ou autres sous-adresses. Le terminal comprend alors un moyen pour mémoriser un répertoire de sous-adresses respectivement en association avec des éléments graphiques qui ont tous un type prédéterminé, et le moyen de construction d'image est apte à sélectionner un élément graphique du type prédéterminé dans le répertoire associé à la sous-adresse lue dans la base et reçue avec l'adresse d'élément graphique désignant le type prédéterminé d'élément graphique.

La construction d'un comportement de l'image vectorielle peut faire intervenir également des deuxièmes éléments graphiques dépendant d'événements en relation avec le fonctionnement du terminal et détectés par au moins un moyen de détection inclus dans le terminal. Dans ce dernier cas, le moyen de construction est apte à construire et présenter l'image vectorielle également avec des deuxièmes éléments graphiques sélectionnés dans la base en fonction de deuxièmes adresses d'élément graphique fournies par le moyen de détection en correspondance avec des événements détectés par exemple relatifs à la charge de la batterie du terminal ou à la couverture radioélectrique pour un radiotéléphone mobile.

D'autres caractéristiques et avantages de la présente invention apparaîtront plus clairement à la lecture de la description suivante de plusieurs réalisations préférées de l'invention en référence aux dessins annexés correspondants dans lesquels :
- la figure 1 est un bloc-diagramme schématique d'un système de notification de message selon une réalisation préférée de l'invention lorsque le terminal est un terminal radiotéléphonique mobile recevant des notifications sous la forme de messages courts ;
- la figure 2 est un tableau faisant correspondre des événements d'une messagerie unifiée relative à des messages reçus destinés au terminal à des premiers éléments graphiques prémémorisés dans le terminal ; et
- la figure 3 montre schématiquement une image vectorielle en forme de personnage avec la signification des événements correspondant aux différentes parties et accessoires du personnage.

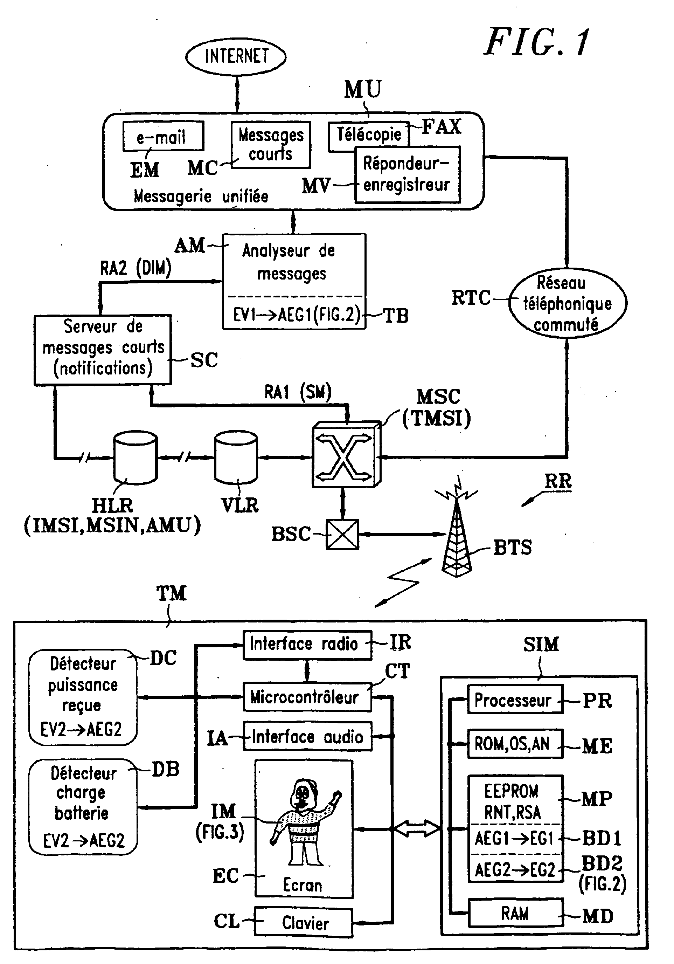

Le système de notification de messages selon l'invention illustré à la figure 1 est relatif à un terminal radiotéléphonique mobile cellulaire TM qui est inclus dans un réseau de radiotéléphonie cellulaire RR supposé être, à titre d'exemple, un réseau de type GSM, bien que le réseau RR puisse être un réseau de type UMTS. Les principaux moyens fixes reliant le terminal TM à un serveur SC de messages courts SC (Service Centre) sont représentés à la figure 1. Le terminal TM est capable de recevoir des notifications sous la forme de messages courts SM (Short Message) transmis par le serveur SC.

Les principaux moyens fixes dans le réseau RR sont une station de base courante BTS couvrant radioélectriquement la cellule courante dans laquelle se trouve momentanément le terminal mobile TM, un contrôleur de station de base BSC et un commutateur de service mobile MSC. Le commutateur MSC est relié à au moins un commutateur du réseau téléphonique commuté RTC et est associé à un enregistreur de localisation des visiteurs VLR. L'enregistreur VLR gère au moins une zone de localisation de quelques cellules du réseau RR et enregistre provisoirement des identités et profils d'usagers se trouvant dans cette zone. Le réseau de radiotéléphonie RR comprend également un enregistreur de localisation nominale HLR relié à des commutateurs de service mobile MSC à travers le réseau de signalisation du réseau de radiotéléphonie. L'enregistreur HLR contient principalement une base de données enregistrant pour chacun des terminaux mobiles tels que le terminal TM, notamment l'identité internationale IMSI de l'usager propriétaire d'un module d'identité d'usager SIM (Subscriber Identity Mobile) inclus d'une manière amovible dans le terminal TM, le numéro d'identification de l'usager mobile MSIN (Mobile Subscriber Identification Number) dans le réseau de radiotéléphonie RR, et le numéro de l'enregistreur VLR desservant temporairement le terminal mobile TM et mis à jour lors de transferts entre des zones de localisation.

Le serveur de messages courts SC est relié à plusieurs commutateurs MSC du réseau de radiotéléphonie RR à travers un réseau d'accès RA1 comme par exemple un réseau numérique à intégration de services RNIS ou un réseau de transmission de paquets de type X.25 ou bien encore un réseau ATM.

Le terminal mobile TM comprend classiquement une interface d'usager composée d'une interface audio IA, d'un écran EC et d'un clavier CL, ainsi qu'un module d'identité d'abonné amovible SIM et est organisé autour d'un microcontrôleur CT doté d'un navigateur et desservant également d'autres circuits tels qu'une interface radio IR avec la station de base BTS.

Pour ce qui concerne l'invention, le terminal TM inclut un moyen de détection pour détecter des évènements en relation avec le fonctionnement du terminal. Le moyen de détection comporte, d'une manière connue, au moins un détecteur de niveau de charge de batterie DB qui compare le niveau de charge de la batterie dans le terminal TM à plusieurs seuils et un détecteur de couverture radioélectrique DC qui compare la puissance radioélectrique reçue maximale provenant au moins de la station de base BTS avec laquelle le terminal est en communication, à plusieurs seuils de puissance.

Le module d'identité SIM comporte un microcontrôleur composé d'un microprocesseur PR, d'une mémoire non réinscriptible ME de type ROM qui inclut un système d'exploitation OS du module SIM et des applications spécifiques telles qu'une application de notification AN selon l'invention, une mémoire non volatile programmable MP de type EEPROM qui contient des données liées au possesseur de la carte SIM et à l'opérateur du réseau de radiotéléphonie RR, notamment l'identité internationale TMSI de l'usager possesseur de la carte SIM, l'identité TMSI temporairement attribuée à l'usager par l'enregistreur VLR, un profil d'abonnement au réseau RR pour l'usager, un répertoire privé de numéros téléphoniques RNT, des données de sécurité ainsi que des bases d'éléments graphiques BD1 et BD2 selon l'invention, et une mémoire de données MD de type RAM destinée à échanger des données avec le microcontrôleur CT du terminal TM.

Le système de notification de messages comprend encore une messagerie unifiée MU et un analyseur de message AM. L'adresse AMU de la messagerie est contenue dans le profil de l'usager écrit dans l'enregistreur de localisation nominale HLR.

La messagerie unifiée MU réunit pour chacun de plusieurs usagers divers moyens de réception de messages respectifs qui sont par exemple une boîte de courrier électronique EM (e-mail) supportée par un serveur POP3 (Post Office Protocol, Version 3) ou IMAP4 (Internet Message Access Protocol, Version 4) relié au réseau internet, et un enregistreur de télécopie FAX relié au réseau téléphonique commuté RTC et un répondeur-enregistreur de messages vocaux MV reliés également au réseau RTC. Lorsque le terminal est un terminal radiotéléphonique mobile, la messagerie unifiée comprend encore un récepteur MC déporté du serveur SC pour recevoir des messages courts destinés au terminal TM. En variante, la messagerie MU peut être implantée au moins partiellement dans un commutateur privé de type PABX.

L'analyseur de messages AM est lié ou intégré à la messagerie unifiée MU. Il analyse les différents messages EM, FAX, MV et MC qui n'ont pas encore été lus dans la messagerie unifiée MU et relatifs à l'usager du terminal TM et dresse un tableau des messages analysés en les classant par taille, expéditeur, niveau d'urgence, présence ou non de l'expéditeur dans un répertoire d'adresses complété au fur et à mesure de la réception des messages, et d'autres caractéristiques de message reçu.

L'analyseur de messages AM comprend une table d'adresses TB qui fait correspondre à un événement EV1 caractérisant l'ensemble des messages reçus relatifs à l'usager dans la messagerie unifiée MU à l'adresse AEG1 d'un élément graphique prédéterminé EG1 d'une image vectorielle IM représentative d'une notification des messages reçus à visualiser sur l'écran EC du terminal TM.

L'image vectorielle IM peut être une image anthropomorphe, telle qu'un personnage comme représenté schématiquement dans l'écran EC à la figure 1, ou zoomorphe. L'image IM est constituée d'une combinaison d'éléments graphiques EG1 en nombre prédéterminé choisis dans une collection d'éléments graphiques prédéterminés. Les éléments graphiques choisis sont juxtaposés pour constituer une instance de l'image vectorielle IM.

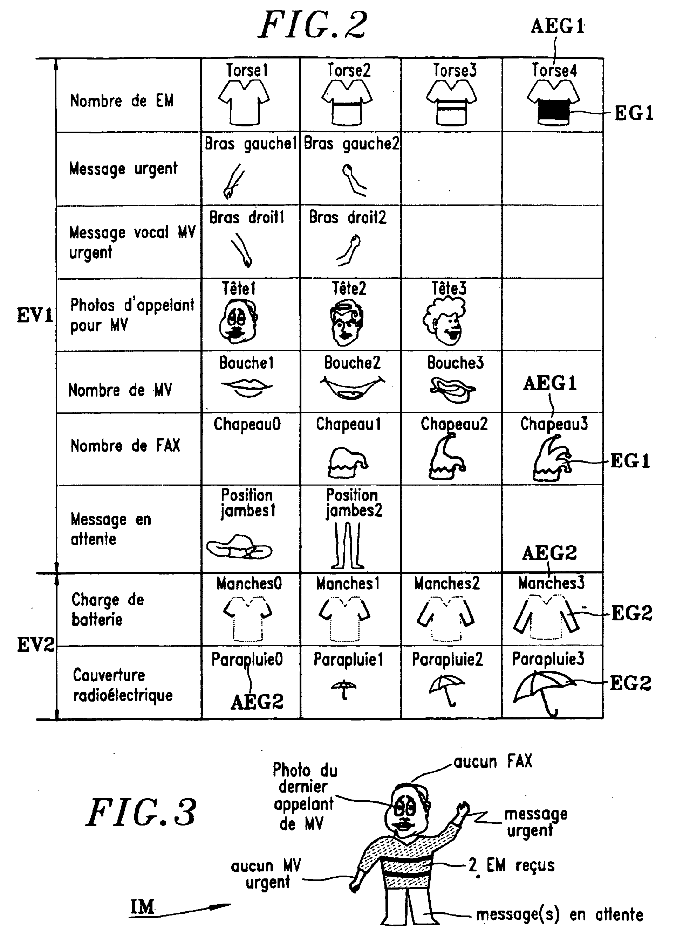

Par exemple, comme montré par le tableau à la figure 2, lorsque l'image graphique IM est un personnage, celle-ci est composée d'éléments graphiques qui peuvent être une tête, un corps, deux bras et deux jambes ainsi que différents habits tels que pantalon ou robe, maillot de corps et chapeau, et différents accessoires tels qu'aura, appareil photo, appareil radio-cassette, valise, etc. Au sens de l'invention, un élément graphique peut être également un texte ou par exemple un numéro d'appel téléphonique ou bien une adresse IP (Internet Protocol). En outre, certains éléments graphiques précédents participent à la représentation d'un comportement du personnage, grâce à des positions différentes des jambes ou à des longueurs différentes des bras ou des jambes ou de manches, ou à des signes différents sur un maillot de corps, ou à des nombres de grelots différents d'un chapeau, etc.

En variante, au lieu de définir chaque élément graphique d'un même type par des images différentes pixel par pixel (bitmap), c'est-à-dire par exemple par diverses images comportant des manches plus ou moins longues, les éléments graphiques d'un même type, tel que partie corporelle ou accessoire, sont associés à des attributs respectifs indiquant des modifications par rapport à un élément graphique de référence pour ce type ; les attributs peuvent être la taille, la hauteur, la longueur ou la largeur de l'élément graphique, tel que manche, chapeau ou membre du corps, ou bien encore la couleur ou le nombre de sous-éléments tel que les grelots du chapeau.

Dans la suite de la description, on considérera que l'adresse AEG1 d'un élément graphique EG1 désigne l'élément graphique défini en pixels dans la base de données BD1 contenu dans le module SIM du terminal TM ou bien un identificateur du type de l'élément graphique avec ses attributs de manière à le reconstituer dans le terminal TM en fonction de l'adresse AEG1.

L'analyseur de messages AM définit des évènements de l'ensemble des messages reçus par la messagerie unifiée MU et relatifs à l'usager possesseur de la carte SIM, chacun en réponse à au moins un nouveau message déposé dans la messagerie afin de traduire ces événements EV1 en des adresses d'élément graphique AEG1 dans la table d'adresses TB qui désigneront respectivement des éléments graphiques prémémorisés EG1 dans la base BD1 pour la construction du personnage IM à afficher sur l'écran EC. Les évènements suivants détectés dans la messagerie par l'analyseur AM correspondent par exemple aux éléments graphiques suivants :
- le nombre de messages de courrier électronique EM non encore lus est signalé par un nombre correspondant de traits horizontaux sur le maillot de corps, le signe «+» ou un rectangle noir par exemple sur celui-ci indiquant qu'au moins trois messages sont en attente de lecture ;
- l'un au moins des bras est levé pour indiquer que la messagerie MU a reçu au moins un message urgent, tandis que le bras en position basse indique qu'il n'y a aucun message urgent ;
- l'autre bras est levé pour indiquer que le répondeur-enregistreur a reçu au moins un message vocal MV urgent ;
- plus la bouche est ouverte, plus le répondeur-enregistreur contient de messages vocaux MV à lire ;
- le nombre de grelots du chapeau indique le nombre de télécopies FAX en attente, le signe « + » sur le chapeau indiquant qu'il y a trois ou plus de trois télécopies en attente ;
- des jambes positionnées en tailleur indiquent qu'il n'y a aucun message en attente tandis que des jambes en position debout indiquent qu'il y a au moins un message en attente dans la messagerie MU.

La combinaison des événements EV1 définissent un comportement, c'est-à-dire un stimulus, du personnage IM à afficher dans le terminal.

Le comportement du personnage IM est ainsi décrit par une succession d'adresses AEG1 d'éléments graphiques EG1 constituant un descripteur DIM du comportement du personnage IM. Par exemple, le personnage IM est décrit par un descripteur DIM comportant les adresses AEG1 des éléments graphiques EG1 relatifs au nombre de traits horizontaux sur le torse, à la position du bras gauche, à la longueur du bras droit, au nombre de grelots du chapeau, à la position des jambes, à la longueur des manches, et au numéro téléphonique du dernier appelant ayant enregistré un message vocal MV dans le répondeur-enregistreur. La figure 3 montre un exemple d'image vectorielle constituée par un comportement déterminé d'un personnage avec la signification des évènements correspondants.

Le descripteur DIM de l'état de la messagerie unifiée relatif aux messages destinés au terminal TM est transmis au serveur de notifications SC soit directement, ou par l'intermédiaire d'un réseau d'accès RA2 de l'un des types déjà définis pour le réseau d'accès RA1. Le descripteur DIM est alors encapsulé dans un message court SM, en tant que notification des messages reçus, par le serveur SC pour être transmis vers le terminal mobile TM à travers les réseaux RA1 et RR. Le serveur SC reçoit avec le descripteur DIM le numéro de l'usager mobile MSIN que la messagerie MU associe à chaque usager afin que le serveur SC consulte l'enregistreur nominal HLR pour y lire l'identité temporaire TMSI attribuée à l'usager ainsi que l'adresse du commutateur de service mobile courant MSC auquel est rattaché le terminal TM. Le serveur SC transmet ainsi le message court SM comprenant le descripteur DIM et l'identité temporaire TMSI vers le terminal TM à travers le commutateur courant MSC. Si le terminal TM n'est pas en fonctionnement ou n'est pas couvert par le réseau RR, le serveur SC conserve dans une file d'attente le descripteur DIM associé au numéro d'abonné MSIN et consulte périodiquement l'enregistreur HLR jusqu'à ce qu'il puisse y lire une adresse de commutateur courant MSC couvrant une zone de localisation où se trouve le terminal TM.

Lors de l'échange de messages courts entre le serveur SC et le module SIM, le terminal TM et en particulier son microcontrôleur CT sont transparents aux informations contenues dans les messages courts SM telles que le descripteur DIM, et ne les interprètent pas.

En réponse au message court contenant le descripteur DIM composé d'une suite d'adresses AEG1 d'éléments graphiques EG1 éventuellement avec leurs attributs, l'application de notification AN dans la mémoire ME du module SIM gère la construction de l'image vectorielle IM représentant le personnage. Chaque adresse d'élément graphique AEG1 désigne un élément graphique correspondant EG1 dans la base BD1 de la mémoire non-volatile MP afin que les différents éléments graphiques désignés par les adresses reçues et contenues dans le descripteur DIM soient réunis pour construire l'image graphique IM et ainsi l'afficher sur l'écran EC du terminal TM.

Lorsqu'une adresse reçue AEG1 est accompagnée des attributs de l'élément graphique correspondant EG1, l'application AN construit l'élément EG1 sur la base d'un élément graphique de référence prémémorisé qui est modifié en fonction des attributs. Par exemple, lorsque l'adresse reçue désigne une manche avec une longueur donnée en tant qu'attribut, la manche correspondante est construite à partir de la plus petite manche et d'un taux d'agrandissement en longueur correspondant à la longueur reçue. Selon un autre exemple, lorsque l'adresse reçue désigne le torse avec deux bandes horizontales, le torse correspondant est construit à partir d'un torse de référence sur lequel sont ajoutées deux bandes. Il en est de même pour l'interprétation d'autres attributs tels que couleur, texte, et tout autre changement de dimension.

Selon une réalisation de l'invention plus complète, la construction d'un comportement de l'image graphique IM fait intervenir des données locales préalablement enregistrées dans le terminal TM et plus particulièrement dans le module d'usager SIM. Dans cette réalisation, un moyen de prémémorisation dans le terminal TM, tel que la mémoire non volatile MP dans le module SIM, prémémorise un répertoire de sous-adresses RSA respectivement en association avec des éléments graphiques ayant tous le même type prédéterminé.

En réponse à une adresse d'élément graphique AEG1 désignant le type prédéterminé d'élément graphique et transmise avec une sous-adresse faisant office d'attribut dans un message court SM par le serveur SC, l'application de notification AN sélectionne l'élément graphique du type prédéterminé associé à la sous-adresse lue dans la base BD1 et reçue avec l'adresse d'élément graphique AEG1 désignant n'importe quel élément graphique du type prédéterminé. Par exemple, le répertoire RSA fait correspondre des sous-adresses qui sont des numéros d'appel téléphoniques d'appelants susceptibles de déposer des messages vocaux MV, ou bien des adresses de source de messages EM, préenregistrés dans le répertoire RNT par l'usager, respectivement à des photographies des têtes scannées et prémémorisées d'appelants. L'application AN sélectionne alors la photographie de la tête dans le répertoire RSA associé au numéro d'appel lu du dernier appelant dans la base BD1 et reçu avec l'adresse d'élément graphique qui désigne a priori une tête quelconque de personnage, en tant qu'élément graphique. Si le numéro d'appel associé à l'adresse d'élément graphique reçue désignant une tête n'est pas reconnu et donc n'a pas été préalablement enregistré dans le répertoire RSA en correspondance avec une tête d'appelant déterminée, l'application AN désigne un élément graphique standard du type prédéterminé, en l'occurrence une tête standard de personnage par exemple surmontée du numéro d'appel de l'appelant non inscrit dans le répertoire RSA et/ou du nom de l'appelant inscrit dans le répertoire RNT.

Le comportement du personnage IM visualisé sur l'écran EC traduit ainsi diverses caractéristiques instantanées de la messagerie unifiée MU relative à l'usager possesseur du module SIM.

L'usager a la possibilité de choisir le type d'image vectorielle IM à visualiser, qui peut être un petit bonhomme, une femme, un animal, etc., ainsi que le comportement de la forme graphique choisie en imposant la correspondance entre les différents éléments graphiques composant l'image IM et les événements EV1 reflétant l'état de la messagerie unifiée, et en imposant également les différents intervalles de variation des attributs des éléments graphiques, tels que taille, dimensions quelconques, couleur, etc. De préférence, le type d'image vectorielle et les éléments graphiques de l'image graphique en correspondance à des événements sont préalablement sélectionnés par l'usager en connectant le terminal TM à un serveur (non représenté) à travers le réseau internet par exemple. Le serveur télécharge la base des éléments graphiques sélectionnés BD1, BD2 et le programme de construction de comportements de l'image sélectionnée pour l'inclure dans l'application de notification AN, permettant de construire et réunir les éléments graphiques en des comportements de l'image sélectionnée en fonction des différents intervalles de variation des attributs.

Comme déjà dit, le terminal TM comprend des détecteurs DB et DC détectant des événements EV2 en relation avec le fonctionnement du terminal. A chaque événement interne EV2 détecté par les détecteurs DB, DC correspond une adresse d'élément graphique AEG2.

Par exemple, une adresse AEG2 désigne un élément graphique représentatif d'un intervalle de variation prédéterminé de la charge de la batterie du terminal TM compris entre deux seuils prédéterminés ; selon la figure 2, la longueur des manches du personnage est proportionnelle au niveau de charge de la batterie, les adresses Manches 0/1/2/3 indiquant respectivement une batterie chargée à moins de 10%, entre 10% est 50%, entre 50% et 80%, et à plus de 80%. Selon un autre exemple, le niveau de puissance radioélectrique reçue dans le canal de trafic entre le terminal TM et la station de base courante BTS est désigné par une adresse AEG2 indiquant qu'il est compris entre deux seuils de puissance prédéterminés dans le détecteur de couverture DC ; selon la figure 2, la largeur d'un parapluie au-dessus du personnage IM croît avec la puissance radioélectrique reçue par le terminal TM, par intervalles de variation prédéterminés. Selon encore un autre exemple, un élément EG2 représente un intervalle de variation de la température ambiante indiqué par un capteur thermométrique inclus dans le terminal.

L'adresse AEG2 avec ses attributs qui peuvent être par exemple la désignation d'un intervalle de variation de la charge de batterie ou de la puissance radioélectrique reçue est transmise par le microcontrôleur CT au module SIM dans laquelle l'application AN fait correspondre l'adresse reçue AEG2 à l'élément graphique correspondant EG2 dans la deuxième base BD2 dans la mémoire MP. L'image vectorielle IM représentant par exemple un personnage est ainsi complétée par des éléments graphiques EG2 dont le comportement est représentatif d'évènements détectés au cours du fonctionnement du terminal.

Après l'affichage de l'image vectorielle IM sur l'écran EC du terminal TM, le microprocesseur PR efface le message court reçu SM dans la mémoire MD, et attend des prochaines adresses AEG1 et AEG2 en réponse à des événements signalés par l'analyseur AM et les détecteurs DB et DC afin de rafraîchir l'image affichée.

L'invention n'est pas limitée à la réalisation décrite en référence à la figure 1.

A la place d'une notification de l'état des messages reçus produite sous la forme d'au moins un message court SM par le serveur SC, chaque notification est transmise sous la forme d'au moins un paquet avec un débit plus élevé grâce à un réseau d'accès à commutation par paquets avec une gestion de la mobilité et accès par voie radio GPRS (General Packet Radio Service). Le serveur SC et le réseau d'accès RA1 sont alors remplacés par un noeud passerelle GGSN (Gateway GPRS Support Node) et un noeud de service SGSN (Serving GPRS Support Node) reliés entre eux par le réseau de paquets GPRS, tous deux à l'enregistreur HRL, et respectivement à l'analyseur de messages AN et à des contrôleurs de station de base BSC du réseau de radiotéléphonie RR.

D'une manière plus générale, le terminal peut être un outil ou dispositif mobile de télécommunications personnel tel qu'un assistant numérique personnel PDA (Personal Digital Assistant), ou un microordinateur portable, muni d'un module d'émission-réception radiotéléphonique cellulaire.

Le terminal peut être également relié à une ligne de télécommunications fixe, comme un ordinateur personnel PC relié à un commutateur du réseau téléphonique commuté RTC. Pour cette réalisation, la messagerie unifiée MU et l'analyseur AM d'une part et un serveur de notification élaborant des notifications contenant des descripteurs DIM d'autre part, constituent des points de commande de service PCS (Service Control Point) qui sont reliés, à travers le réseau de signalisation associé au réseau téléphonique RTC, à des commutateurs d'accès aux services SSP (Service Switching Point) liés à des commutateurs à autonomie d'acheminement du réseau RTC. Un couple de commutateurs à autonomie d'acheminement et de commutateurs d'accès aux services dans le réseau RTC est sensiblement équivalent au couple MCS et VLR dans le réseau de radiotéléphonie RR.

Selon encore d'autres réalisations, le terminal est un téléviseur qui contient toutes les fonctionnalités qui ont été décrites dans le terminal TM et le module SIM en relation avec l'invention et qui est relié à une ligne de télécommunications, telle qu'une ligne téléphonique du réseau RTC ou une ligne de réseau câblé. Dans ce dernier cas, la tête du réseau câblé contient un serveur de notification adapté équivalent au serveur SC montré à la figure 1.

## Revendications

1. Système pour notifier des messages reçus dans des moyens de réception de messages (MU) à un terminal (TM) par image vectorielle (IM) visualisée sur le terminal, le système comprenant un moyen d'analyse de messages (AM) connecté aux moyens de réception pour définir des événements de l'ensemble des messages reçus, et un moyen de construction d'image lié à une base d'éléments graphiques pour générer une image vectorielle composée d'éléments graphiques dépendant des évènements, **caractérisé en ce qu'**il comprend un serveur de notification (SC) apte à transmettre au terminal (TM) à travers un réseau de télécommunications (RR) une notification (SM) comprenant des adresses (AEG1) d'éléments graphiques (EG1) fournis par le moyen d'analyse en correspondance aux événements (EV1), et **en ce que** le terminal (TM) comprend le moyen de construction d'image (AN, MP) et la base d'éléments graphiques (BD1) afin que le moyen de construction soit apte à construire et présenter dans le terminal un comportement de l'image vectorielle composée d'éléments graphiques sélectionnés dans la base en fonction des adresses d'élément graphique incluses dans la notification transmise.

2. Système conforme à la revendication 1, **caractérisé en ce que** le terminal comprend un moyen (MP) pour mémoriser un répertoire de sous-adresses (RSA) respectivement en association avec des éléments graphiques (EG1) qui ont tous un type prédéterminé, et le moyen de construction d'image (AN, MP) est apte à sélectionner un élément graphique du type prédéterminé dans le répertoire (RSA) associé à la sous-adresse lue dans la base (BD1) et reçue avec l'adresse d'élément graphique (AEG1) désignant le type prédéterminé d'élément graphique.

3. Système conforme à la revendication 2, **caractérisé en ce que** les sous-adresses sont des numéros d'appel et les éléments graphiques (EG1) qui ont tous le type prédéterminé sont des photographies de tête scannées des appelants correspondant aux numéros d'appel respectivement.

4. Système conforme à la revendication 2 ou 3, **caractérisé en ce que**, lorsque le moyen de construction d'image (AN, ME) ne reconnaît pas une sous-adresse dans le répertoire (RSA), l'élément graphique (EG1) correspondant est un élément graphique standard.

5. Système conforme à l'une quelconque des revendications 1 à 4, dans lequel le terminal (TM) comprend au moins un moyen de détection (DB, DC) pour détecter des évènements (EV2) en relation avec le fonctionnement du terminal, **caractérisé en ce que** le moyen de construction (AN, MP) est apte à construire et présenter l'image vectorielle (IM) également avec des deuxièmes éléments graphiques (EG2) sélectionnés dans la base (BD2) en fonction de deuxièmes adresses d'élément graphique (AEG2) fournies par le moyen de détection en correspondance avec des événements détectés.

6. Système conforme à la revendication 5, **caractérisé en ce qu'**un événement (EV2) en relation avec le fonctionnement du terminal est la charge d'une batterie du terminal compris dans un intervalle de variation prédéterminé, ou la puissance radioélectrique reçue par le terminal comprise dans un intervalle de variation prédéterminé.

7. Système conforme à l'une quelconque des revendications 1 à 6, **caractérisé en ce que** le terminal est un terminal radiotéléphonique mobile cellulaire (TM) comportant un module d'identité d'abonné (SIM) amovible du terminal et incluant le moyen de construction d'image vectorielle (AN, MP) et la base d'éléments graphiques (BD1, BD2).

8. Système conforme à l'une quelconque des revendications 1 à 7, **caractérisé en ce que** les éléments graphiques (EG1, EG2) de l'image vectorielle (IM) sont sélectionnés depuis le terminal (TM) dans un serveur afin de télécharger la base (BD1, BD2) d'éléments graphiques sélectionnés en correspondance à des événements et un programme de construction (AN) de comportements d'image vectorielle dans le terminal.

9. Procédé pour notifier des messages reçus dans des moyens de réception de messages (MU) à un terminal (TM) par image vectorielle (IM) visualisée sur un terminal, comprenant
- une étape d'analyse de messages (AM) au cours de laquelle un moyen d'analyse de messages définit des événements de l'ensemble des messages reçus par les moyens de réception (MU);
- une étape de construction d'image au cours de laquelle un moyen de construction d'image lié à une base d'éléménts graphiques génère une image vectorielle composée d'éléments graphiques dépendant des événements définis ;
**caractérisé en ce qu'**il comprend une étape de notification au cours de laquelle un serveur de notification (SC) transmet au terminal à travers un réseau de télécommunications (RR) une notification (SM) comprenant des adresses d'éléments graphiques (EG1) fournis par le moyen analyse en correspondance aux événements (EV1), et **en ce que**, le terminal comprenant le moyen de construction d'image et la base d'éléments graphiques, l'étape de construction d'image est mise en oeuvre par le terminal et, lors de cette étape de construction, le moyen de construction construit et présente dans le terminal un comportement de l'image vectorielle composée d'éléments graphiques sélectionnés dans la base en fonction des adresses d'élément graphique incluses dans la notification transmise.

10. Terminal de communication comprenant une base d'éléments graphiques et un moyen de construction d'image, ledit moyen de construction étant adapté pour, suite à la réception par le terminal à travers un réseau de télécommunications (RR) d'une notification (SM) transmise par un serveur de notification et contenant des adresses d'éléments graphiques (EG1) dépendant d'événements définis par analyse d'un ensemble de messages, construire et présenter dans le terminal un comportement de l'image vectorielle composée d'éléments graphiques sélectionnés dans la base en fonction des adresses d'élément graphique incluses dans la notification transmise.

## Claims

1. Notification system for notifying a terminal (TM) of messages received in message receiving means (MU) by means of a vector image (IM) displayed on said terminal, said notification system comprising message analyzer means (AM) connected to said receiving means to define events relating to all messages received, and image construction means connected to a database of graphical elements for generating a vector image made up of graphical elements depending on said events, **characterized in that** it includes a notification server (SC) able to transmit to said terminal (TM) via a telecommunication network (RR) a notification (SM) comprising addresses (AEG1) of graphical elements (EG1) supplied by said analyzer means in corresponding relationship to said events (EV1), and **in that** said terminal (TM) comprises said image construction means (AN, MP) and said database of graphical elements (BD1) in order for the construction means to be able to construct and show in the terminal a behavior of said vector image made up of graphical elements selected in said database as a function of graphical element addresses included in the notification transmitted.

2. System according to Claim 1, **characterized in that** said terminal includes means (MP) for storing a directory of subaddresses (RSA) respectively associated with graphical elements (EG1) which are all of a predetermined type, and said image construction means (AN, MP) are able to select a graphical element of said predetermined type in said directory (RSA) associated with the subaddress read in said database (BD1) and received with said graphical element address (AEG1) designating said predetermined type of graphical element.

3. System according to Claim 2, **characterized in that** said subaddresses are telephone numbers and said graphical elements (EG1) which are all of said predetermined type are scanned photographs of the faces of callers corresponding to respective numbers.

4. System according to Claim 2 or 3, **characterized in that**, if said image construction means (AN, ME) does not recognize a subaddress in said directory (RSA), then the corresponding graphical element (EG1) is a standard graphical element.

5. System according to any one of Claims 1 to 4, in which the terminal (TM) comprises at least one detector means (DB, DC) for detecting events (EV2) relating to operation of said terminal, **characterized in that** the construction means (AN, MP) are able to construct and present the vector image (IM) also with second graphical elements (EG2) selected in said database (BD2) as a function of second graphical element addresses (AEG2) supplied by the detector means in corresponding relationship to detected events.

6. System according to Claim 5, **characterized in that** one event (EV2) relating to operation of said terminal is the charge in a battery of the terminal, which is within a predetermined range of variation, or the RF signal strength received by said terminal, which is within a predetermined range of variation.

7. System according to any one of Claims 1 to 6, **characterized in that** said terminal is a cellular mobile telephone terminal (TM) including a subscriber identity module (SIM) removable from said terminal and incorporating said vector image construction means (AN, MP) and said database of graphical elements (BD1, BD2).

8. System according to any one of Claims 1 to 7, **characterized in that** said graphical elements (EG1, EG2) of said vector image (IM) are selected in a server from said terminal (TM) in order to download into said database (BD1, BD2) graphical elements selected in corresponding relationship to events and a program (AN) for constructing vector image behaviors in said terminal.

9. Method for notifying a terminal (TM) of messages received in message receiving means (MU) by means of a vector image (IM) displayed on a terminal, comprising
- a step of message analysis (AM) in which a message analyzer means defines events relating to all messages received by the receiving means (MU),
- a step of image construction in which an image construction means connected to a database of graphical elements generates a vector image made up of graphical elements depending on said defined events;
**characterized in that** it includes a step of notification in which a notification server (SC) transmits to said terminal via a telecommunication network (RR) a notification (SM) comprising addresses of graphical elements (EG1) supplied by said analyzer means in corresponding relationship to said events (EV1), and **in that**, said terminal comprising said image construction means and said database of graphical elements, the image construction step is implemented by the terminal and, during this construction step, the construction means constructs and shows in the terminal a behavior of said vector image made up of graphical elements selected in said database as a function of graphical element addresses included in the notification transmitted.

10. Communication terminal comprising a database of graphical elements and an image construction means, said construction means being adapted so as, following the receipt by the terminal through a telecommunication network (RR) of a notification (SM) transmitted by a notification server and containing addresses of graphical elements (EG1) depending on events defined by analyzing a set of messages, to construct and show in the terminal a behavior of said vector image made up of graphical elements selected in said database as a function of graphical element addresses included in the notification transmitted.

## Patentansprüche

1. System, um ein Endgerät (TM) über in Mitteilungsempfangseinrichtungen (MU) empfangene Mitteilungen über ein auf dem Endgerät angezeigtes Vektorbild (IM) zu benachrichtigen, wobei das System eine Mitteilungsanalyseeinrichtung (AM), die mit den Empfangseinrichtungen verbunden ist, um Ereignisse der Gesamtheit der empfangenen Mitteilungen zu definieren, und eine Bildkonstruktionseinrichtung enthält, die mit einer Basis von Grafikelementen verbunden ist, um ein Vektorbild zu erzeugen, das aus von den Ereignissen abhängenden Grafikelementen besteht, **dadurch gekennzeichnet, dass** es einen Benachrichtigungsserver (SC) enthält, der eine Benachrichtigung (SM) über ein Telekommunikationsnetz (RR) an das Endgerät (TM) übertragen kann, die Adressen (AEG1) von Grafikelementen (EG1) enthält, welche von der Analyseeinrichtung in Übereinstimmung mit den Ereignissen (EV1) bereitgestellt werden, und dass das Endgerät (TM) die Bildkonstruktionseinrichtung (AN, MP) und die Basis von Grafikelementen (BD1) enthält, damit die Konstruktionseinrichtung ein Verhalten des aus Grafikelementen, die in der Basis in Abhängigkeit von den in der übertragenen Benachrichtigung enthaltenen Grafikelementadressen ausgewählt werden, bestehenden Vektorbilds im Endgerät konstruieren und anzeigen kann.

2. System nach Anspruch 1, **dadurch gekennzeichnet, dass** das Endgerät eine Einrichtung (MP) zum Speichern eines Verzeichnisses (RSA) von Teiladressen je in Verbindung mit Grafikelementen (EG1) enthält, die alle einen vorbestimmten Typ haben, und die Bildkonstruktionseinrichtung (AN, MP) ein Grafikelement des vorbestimmten Typs in dem Verzeichnis (RSA) auswählen kann, das der in der Basis (BD1) gelesenen und mit der den vorbestimmten Grafikelementtyp bezeichnenden Grafikelementadresse (AEG1) empfangenen Teiladresse zugeordnet ist.

3. System nach Anspruch 2, **dadurch gekennzeichnet, dass** die Teiladressen Rufnummern sind, und die Grafikelemente (EG1), die alle den vorbestimmten Typ haben, gescannte Kopffotographien der Anrufer sind, die den Rufnummern entsprechen.

4. System nach Anspruch 2 oder 3, **dadurch gekennzeichnet, dass**, wenn die Bildkonstruktionseinrichtung (AN, ME) keine Teiladresse im Verzeichnis (RSA) erkennt, das entsprechende Grafikelement (EG1) ein Standard-Grafikelement ist.

5. System nach einem der Ansprüche 1 bis 4, bei dem das Endgerät (TM) mindestens eine Erfassungseinrichtung (DB, DC) aufweist, um Ereignisse (EV2) in Zusammenhang mit dem Betrieb des Endgeräts zu erfassen, **dadurch gekennzeichnet, dass** die Konstruktionseinrichtung (AN, MP) das Vektorbild (IM) ebenfalls mit zweiten Grafikelementen (EG2) konstruieren und anzeigen kann, die aus der Basis (BD2) in Abhängigkeit von zweiten Grafikelementadressen (AEG2) ausgewählt werden, die von der Erfassungseinrichtung in Übereinstimmung mit erfassten Ereignissen bereitgestellt werden.

6. System nach Anspruch 5, **dadurch gekennzeichnet, dass** ein Ereignis (EV2) in Zusammenhang mit dem Betrieb des Endgeräts die Ladung einer Batterie des Endgeräts innerhalb eines vorbestimmten Veränderungsintervalls oder die vom Endgerät innerhalb eines vorbestimmten Veränderungsintervalls empfangene Funkleistung ist.

7. System nach einem der Ansprüche 1 bis 6, **dadurch gekennzeichnet, dass** das Endgerät ein zellulares Mobilfunkendgerät (TM) ist, welches ein Teilnehmeridentitätsmodul (SIM) aufweist, das vom Endgerät entfernbar ist und die Vektorbild-Konstruktionseinrichtung (AN, MP) und die Basis von Grafikelementen (BD1, BD2) enthält.

8. System nach einem der Ansprüche 1 bis 7, **dadurch gekennzeichnet, dass** die Grafikelemente (EG1, EG2) des Vektorbilds (IM) ausgehend vom Endgerät (TM) in einem Server ausgewählt werden, um die Basis (BD1, BD2) von Grafikelementen, die in Übereinstimmung mit Ereignissen ausgewählt wurden, und ein Konstruktionsprogramm (AN) von Vektorbild-Verhaltensweisen in das Endgerät herunterzuladen.

9. Verfahren, um ein Endgerät (TM) über in Mitteilungsempfangseinrichtungen (MU) empfangene Mitteilungen über ein auf einem Endgerät angezeigtes Vektorbild (IM) zu benachrichtigen, das enthält
- einen Schritt der Mitteilungsanalyse (AM), während dem eine Mitteilungsanalyseeinrichtung Ereignisse der Gesamtheit der von den Empfangseinrichtungen (MU) empfangenen Mitteilungen definiert;
- einen Schritt der Bildkonstruktion, während dem eine Bildkonstruktionseinrichtung, die mit einer Basis von Grafikelementen verbunden ist, ein Vektorbild erzeugt, das aus von den definierten Ereignissen abhängenden Grafikelementen besteht;
**dadurch gekennzeichnet, dass** es einen Schritt der Benachrichtigung enthält, während dem ein Benachrichtigungsserver (SC) an das Endgerät über ein Telekommunikationsnetz (RR) eine Benachrichtigung (SM) überträgt, die Adressen von Grafikelementen (EG1) enthält, welche von der Analyseeinrichtung in Übereinstimmung mit den Ereignissen (EV1) bereitgestellt werden, und dass, da das Endgerät die Bildkonstruktionseinrichtung und die Basis von Grafikelementen enthält, der Schritt der Bildkonstruktion vom Terminal durchgeführt wird, und während dieses Konstruktionsschritts die Konstruktionseinrichtung ein Verhalten des aus Grafikelementen, die in der Basis in Abhängigkeit von den in der übertragenen Benachrichtigung enthaltenen Grafikelementadressen ausgewählt werden, bestehenden Vektorbilds im Endgerät konstruiert und anzeigt.

10. Kommunikationsendgerät, das eine Basis von Grafikelementen und eine Bildkonstruktionseinrichtung enthält, wobei die Konstruktionseinrichtung geeignet ist, um, nachdem das Endgerät über ein Telekommunikationsnetz (RR) eine Benachrichtigung (SM) empfangen hat, die von einem Benachrichtigungsserver übertragen wird und Adressen von Grafikelementen (EG1) enthält, welche von durch Analyse einer Gruppe von Mitteilungen definierten Elementen abhängen, im Endgerät ein Verhalten des aus Grafikelementen, die in der Basis in Abhängigkeit von den in der übertragenen Benachrichtigung enthaltenen Adressen von Grafikelementen ausgewählt werden, bestehenden Vektorbilds zu konstruieren und anzuzeigen.
